# EUROPEAN PATENT SPECIFICATION

(11) **EP 3 901 678 B1**
(45) Date of publication and mention of the grant of the patent: **14.02.2024**
(21) Application number: 20866943.2
(22) Date of filing: 26.02.2020
(51) Int. Cl.: G02B 6/44, G02B 6/48, G02B 6/255, G02B 6/38

(54) **HOUSEHOLD CABLE CONNECTING DEVICE AND HOUSEHOLD CABLE CONNECTING SYSTEM**
HAUSHALTSKABELVERBINDUNGSVORRICHTUNG UND HAUSHALTSKABELVERBINDUNGSSYSTEM
DISPOSITIF DE RACCORDEMENT DE CÂBLE DOMESTIQUE ET SYSTÈME DE RACCORDEMENT DE CÂBLE DOMESTIQUE

(43) Date of publication of application: 27.10.2021
(73) Proprietor: HUAWEI TECHNOLOGIES CO., LTD., Shenzhen, Guangdong 518129 (CN)
(72) Inventor: CHEN, Yangquan, Shenzhen, Guangdong 518129 (CN); WANG, Wei, Shenzhen, Guangdong 518129 (CN); XIONG, Wei, Shenzhen, Guangdong 518129 (CN); PEI, Guohua, Shenzhen, Guangdong 518129 (CN); YIN, Weiwei, Shenzhen, Guangdong 518129 (CN)
(74) Representative: Körber, Martin Hans
(86) International application number: PCT/CN2020/076822
(87) International publication number: WO 2021/168700

(56) References cited:
- WO-A1-2013/155141
- CN-A- 101 539 650
- CN-A- 101 583 893
- CN-A- 106 300 206
- JP-A- 2004 029 657
- JP-A- 2005 266 261
- JP-A- 2008 129 170
- US-A1- 2011 097 050
- US-A1- 2014 133 806
- US-B1- 6 539 147

## Description

### TECHNICAL FIELD

This application relates to the field of optical fiber communications technologies, and in particular, to a drop cable connection apparatus and a drop cable connection system.

### BACKGROUND

Currently, an optical fiber transmission system of an optical fiber access network includes: a central office end device, a terminal device, and an optical distribution network (Optical Distribution Network, ODN) that is connected between the central office end device and the terminal device. The optical distribution network can be divided into optical cable distribution points and user access points by usage and position. Correspondingly, an optical cable can be divided into three sections: a feeder optical cable, a distribution optical cable, and a drop cable. At the user access points, a fiber access terminal (Fiber Access Terminal, FAT) is mainly used to connect a distribution optical cable and a drop cable, and the drop cable is directly connected to a drop device. For example, the drop cable is connected to the drop device by using a pre-made cable, to implement fast plugging and unplugging. In addition, when being applied outdoors, the fiber access terminal may be disposed overhead by being fastened on a pole and a tower. To prevent the drop cable from being accidentally pulled to affect fastening of the pole and the tower or cause damage to the fiber access terminal on the pole and the tower, usually, the drop cable needs to use a special structure and material to implement a brittle fracture, to be specific, the drop cable needs to brittlely fracture when bearing a relatively large tensile force.

However, when the foregoing drop cable with a brittle fracturing function is subjected to an accidental tensile force, due to a structure and a material of the drop cable, the drop cable is usually subjected to a relatively large tensile force, but the drop cable still does not fracture. The drop cable cannot reliably fracture brittlely. As a result, upstream connection devices, such as the fiber access terminal, are vulnerable to damage, and people and houses may also be damaged to different degrees. Therefore, protection is relatively poor.

US 2014/0133806 A1 discloses a multiport fiber connection terminal with a compact footprint having a configuration for easy accessibility and interconnection of cables The terminal may further comprise cable connectors that are configured to allow for weatherproof installation of pre-terminated fiber optic cables with the terminal ports.

US 2011/0097050 A1 discloses multi-port optical connection terminals and mounting platforms and related methods designed to secure optical components inside an enclosure of the multi-port optical connection terminals In particular, the multi-port optical connection terminal includes an enclosure comprising a base and a cover configured to attach to the base to define an interior cavity. A mounting platform defining a mounting surface for mounting at least one optical component comprised from the group consisting of at least one splice tray and at least one optical splitter to the at least one mounting surface is provided. A plurality of mounting tabs of the mounting platform are configured to extend into channels disposed in an interior wall of the base. In this manner, the mounting platform and any optical components secured thereto are secured inside the interior cavity, which may prevent damage to optical fibers and/or splices of the optical components.

### SUMMARY

This application provides a drop cable connection apparatus and a drop cable connection system. A drop cable is divided into a first optical cable section and a second optical cable section that are connected to each other. Compared with an entire drop cable, a section-based connection structure fractures more easily Therefore, when being subjected to accidental pulling, the drop cable is of high reliability in fracturing, and high protection is ensured. The invention is defined in the independent claims. Advantageous features are defined in the dependent claims.

According to a first aspect, this application provides a drop cable connection apparatus, including: a pre-connection terminator and a drop cable. The drop cable includes a first optical cable section and a second optical cable section, one end of the first optical cable section is connected to the pre-connection terminator, the other end of the first optical cable section is in a signal connection to one end of the second optical cable section, and the other end of the second optical cable section is connected to a drop device.

The drop cable is divided into the first optical cable section and the second optical cable section that are connected to each other, so that when the drop cable is subjected to accidental pulling or the like, a fracture easily occurs at a joint of the first optical cable section and the second optical cable section, to protect an upstream device such as a pre-connection terminator. Therefore, in the foregoing technical solution, a brittle fracturing function of the drop cable can be reliably implemented, and high protection is ensured.

In a possible implementation, the drop cable connection apparatus further includes a retainer that at least positions the joint of the first optical cable section and the second optical cable section, where the retainer is fastened relative to the pre-connection terminator.

In a scenario in which the drop cable is prone to shake, for example, when the drop cable is overhead, the retainer is disposed, so that the joint of the first optical cable section and the second optical cable section can be retained. This prevents the joint of the first optical cable section and the second optical cable section from fracturing when no predetermined tensile force is exerted

In a possible implementation, the retainer includes a support. A first passage that is penetrated into by the first optical cable section is disposed in the support, a second passage that is penetrated into by the second optical cable section is further disposed in the support, and the joint of the first optical cable section and the second optical cable section is located on the support.

The first passage is disposed in a first support, so that the first passage may support a part that is of the first optical cable section and that is close to the joint. The second passage is disposed in a second support, so that the second passage may support a part that is of the second optical cable section and that is close to the joint. Further, the joint is further located on the support. Therefore, the support may keep the part that is of the first optical cable section and that is close to the joint, the joint, and the part that is of the second optical cable section and that is close to the joint fastened relative to each other, and no relative displacement occurs, to ensure stability of signal transmission between the first optical cable section and the second optical cable section.

In a possible implementation, the retainer further includes a first fastener and a second fastener that are disposed on the support. The first fastener abuts against the first optical cable section, so that the first optical cable section is pressed against an inner wall of the first passage, and the second fastener abuts against the second optical cable section, so that the second optical cable section is pressed against an inner wall of the second passage.

The first fastener presses the first optical cable section against the inner wall of the first passage, and the second fastener presses the second optical cable section against the inner wall of the second passage, so that the first optical cable section and the second optical cable section can be fastened more firmly, which is also equivalent to: the support exerts a specific clamping force on the entire drop cable. In addition, an ultimate tensile force at which the drop cable fractures may be set by using a value of an abutting force exerted on the optical cable section by the first fastener or the second fastener.

In a possible implementation, the other end of the first optical cable section and one end of the second optical cable section are joined in a hot fusion splicing manner.

The joining using the hot fusion splicing manner can not only ensure that a loss of a node of a signal connection between the first optical cable section and the second optical cable section is small, but also ensure high reliability, and is also easy to operate on site.

In a possible implementation, there are at least two drop cables, at least two output interfaces are disposed on the pre-connection terminator, and one output interface is correspondingly connected to one drop cable.

When a plurality of users need to be connected, a quantity of drop cables can be used to connect to different users. In a possible implementation, the drop cable connection apparatus further includes a support bracket fastened relative to the pre-connection terminator. The retainer is disposed on the support bracket.

The retainer is supported by the support bracket, so that the retainer and the pre-connection terminator can be kept fastened relative to each other.

In a possible implementation, at least two positioning structure groups are disposed on the support bracket, each positioning structure group includes at least two positioning structures, and each positioning structure is configured to position one retainer. All the positioning structures in each positioning structure group are arranged on a same arc, and arcs corresponding to different positioning structure groups are concentric and have different radiuses.

In the scenario in which drop cables are overhead, most retainers enclose an annular space around a fixed bracket used for overhead deployment of the drop cables. In a support bracket, all positioning structures in a positioning structure group are arranged on a same arc, and arcs corresponding to different positioning structure groups are concentric, so that positioning structures between the positioning structure groups can maintain a similar relative distance from each other, thereby facilitating mounting of the retainers and the support bracket.

In a possible implementation, quantities of positioning structures included in the different positioning structure groups gradually increase in a direction from a center of the arc to the outside of the center of the arc.

In a scenario in which drop cables are overhead, most retainers enclose an annular space around a fixed bracket, so that quantities of positioning structures can gradually increase in a direction from a center of the arc to the outside of the center of the arc. In this way, the annular space can be fully used in space arrangement of the retainers.

In a possible implementation, heights of top end parts of the positioning structures included in the different positioning structure groups gradually decrease in the direction from the center of the arc to the outside of the center of the arc.

Because top end surfaces of the positioning structures included in the different positioning structure groups gradually decrease from inside to outside, when there are a plurality of retainers and a spacing between the retainers is relatively small, mounting heights of the positioning structures that belong to the different positioning structure groups on the support bracket are different. Correspondingly, mounting heights of retainers located on different arcs gradually decrease from inside to outside, thereby facilitating mounting of the retainers and the support bracket.

In a possible implementation, the support bracket includes a first support plate and a second support plate that are spaced apart from each other and that are disposed opposite to each other, each positioning structure includes a first mounting via hole and a second mounting via hole that are respectively disposed on the first support plate and the second support plate, and the retainer is threaded in the first mounting via hole and the second mounting via hole of the positioning structure.

The support bracket includes the first support plate and the second support plate that are spaced apart from each other, so that lightweight of the support bracket can be implemented. In addition, the retainer can be threaded in the first mounting via hole and the second mounting via hole to simply fasten the retainer. This structure is simple and is easy to implement.

In a possible implementation, the first mounting via hole is clamped to the retainer, a first clamping stop part is disposed on an outer wall of the retainer, and a first avoidance notch is disposed on a hole wall of the first mounting via hole, to avoid movement of the first clamping stop part in a process in which the retainer penetrates into the first mounting via hole. The first clamping stop part has a concave first clamping stop groove to correspond to the first mounting via hole, and the first clamping stop groove may be clamped at edges of two axial apertures of the first mounting via hole.

The first avoidance notch is disposed, so that the retainer and the first clamping stop part may smoothly penetrate into the first mounting via hole and the second mounting via hole, and the first clamping stop groove on the first clamping stop part may also be clamped at the edges of the two axial apertures of the first mounting via hole, in other words, the first mounting via hole can be clamped to the retainer.

In a possible implementation, at least two output interfaces are disposed on the pre-connection terminator, the pre-connection terminator has a first mounting surface and a second mounting surface thereon, and at least one output interface is disposed on each of the first mounting surface and the second mounting surface. A range of an included angle α between the first mounting surface and the second mounting surface is 0° < α < 180°.

The at least two output interfaces disposed on the pre-connection terminator are configured to be correspondingly connected to connectors of first optical cable sections respectively. By disposing two mounting surfaces on the pre-connection terminator, the at least two output interfaces may be divided into two groups, and each group of output interfaces is fastened to one mounting surface. In this way, at least mounting of connectors corresponding to different groups of output interfaces does not interfere with each other, thereby reducing difficulty in mounting the first optical cable sections and the pre-connection terminator.

According to a second aspect, this application provides a drop cable connection system, including the foregoing drop cable connection apparatus.

The drop cable connection system includes the foregoing drop cable connection apparatus. Because a drop cable is divided into a first optical cable section and a second optical cable section that are connected to each other, when the drop cable is subjected to accidental pulling or the like, a fracture easily occurs at a joint of the first optical cable section and the second optical cable section, to protect an upstream device such as a pre-connection terminator. Therefore, in the foregoing technical solution, a brittle fracturing function of the drop cable can be reliably implemented, and high protection is ensured.

In a possible implementation, the drop cable connection system further includes an optical cable armor clamp configured to position the second optical cable section, where the optical cable armor clamp is fastened relative to the pre-connection terminator, and when a tensile force exerted on the second optical cable section is greater than or equal to a tensile threshold of the optical cable armor clamp, the second optical cable section may flutter relative to the optical cable armor clamp.

The optical cable armor clamp is disposed, so that when the tensile force exerted on the second optical cable section is less than the tensile threshold, the optical cable armor clamp may position and fasten the second optical cable section. When the tensile force exerted on the second optical cable section is greater than a first preset tensile force value, the optical cable armor clamp unfastens the second optical cable section, the second optical cable section may flutter relative to the optical cable armor clamp, and the tensile force may be transferred to one end that is of the second optical cable section and that is close to a retainer.

The optical cable armor clamp includes at least one preformed armor rod, each preformed armor rod is wound around one second optical cable section, and the preformed armor rod has the tensile threshold.

The preformed armor rod may be used to position the second optical cable section, and has a simple structure that is easy to implement.

### BRIEF DESCRIPTION OF DRAWINGS

FIG. 1 is a structural block diagram of a drop cable connection system according to an embodiment of the claimed invention;
FIG. 2 is a schematic diagram of use states of an optical cable armor clamp in a drop cable connection system according to an embodiment not forming part of the claimed invention;
FIG. 3 is a schematic structural diagram of a drop cable connection system according to an embodiment of the claimed invention;
FIG. 4 is a locally enlarged diagram of a component A in FIG. 3;
FIG. 5 is a schematic diagram of another structure of a drop cable connection system according to an embodiment of the claimed invention;
FIG. 6 is a schematic diagram of still another structure of a drop cable connection system according to an embodiment of the claimed invention;
FIG. 7 is a schematic diagram of still another structure of a drop cable connection system according to an embodiment of the claimed invention;
FIG. 8 is a front view of a pre-connection terminator in a drop cable connection apparatus according to an embodiment of the claimed invention;
FIG. 9 is a side view of a pre-connection terminator in a drop cable connection apparatus according to an embodiment of the claimed invention;
FIG. 10 is a side view of another structure of a pre-connection terminator in a drop cable connection apparatus according to an embodiment not forming part of the claimed invention;
FIG. 11 is a schematic structural diagram of a retainer suitable to be used with the drop cable connection apparatus according to the claimed invention;
FIG. 12 is a schematic diagram of another structure of a retainer suitable to be used with the drop cable connection apparatus according to the claimed invention;
FIG. 13 is a sectional view of a retainer in a drop cable connection apparatus according to an embodiment of the claimed invention;
FIG. 14 is a locally enlarged diagram of a component B in FIG. 13;
FIG. 15 is a schematic diagram of mounting of a retainer in a drop cable connection apparatus according to an embodiment of the claimed invention;
FIG. 16 is a schematic structural diagram of a support bracket in a drop cable connection apparatus according to an embodiment of the claimed invention;
FIG. 17 is a top view of a support bracket in a drop cable connection apparatus according to an embodiment of the claimed invention;
FIG. 18 is a schematic structural diagram of fastening a retainer on a support bracket in a drop cable connection apparatus according to an embodiment of the claimed invention;
FIG. 19 is a sectional view of a support bracket in a drop cable connection apparatus according to an embodiment of the claimed invention;
FIG. 20 is a locally enlarged schematic diagram of a component C in FIG. 19;
FIG. 21 is a schematic structural diagram of assembly of a retainer and a support bracket in a drop cable connection apparatus according to an embodiment of the claimed invention; and
FIG. 22 is a schematic structural diagram, from another angle, of assembly of a protector and a support bracket in a drop cable connection apparatus according to an embodiment of the claimed invention.

Description of reference signs in the accompanying drawings:
200: Drop cable connection system; 100: Drop cable connection apparatus; 201: Central office end device; 202: Fixed pole; 203: Pedal; 1: Distribution optical cable; 2 and 20: Pre-connection terminators; 21: Output interface; 22: Input interface; 23: Fiber adapter; 24: First mounting surface; 25: Second mounting surface; 26: Box body; 27: Transitional surface; 28: Dustproof cap; 3: Drop cable; 31: First optical cable section; 32: Second optical cable section; 311: Pre-made connector; 4: Drop device; 41: User; 5: Optical cable armor clamp; 51: Preformed armor rod; 511: Connection buckle; 512: Fixed ring; 513: Fixed horizontal bar; 6: Retainer; 60: First clamping stop part; 61: Protective housing; 62: First housing; 63: Second housing; 64: Optical cable through hole; 65: Protrusion; 66: Stopper; 67: Support; 671: First passage; 672: Second passage; 681: First fastener; 682: Second fastener; 691 and 692: Pressing protrusions; 8: Support bracket; 81: First support plate; 82: Second support plate; 83: Connection side panel; 84: Lifting lug; 9: Positioning structure group; 90: Positioning structure; 91: First mounting via hole; 92: Second mounting via hole; 93 and 94: Step parts; 95: First clamping stop groove; and 96: First avoidance notch.

### DESCRIPTION OF EMBODIMENTS

Terms used in implementations of this application are merely used to explain specific embodiments of this application, but are not intended to limit this application. The following describes implementations of the embodiments of this application in detail with reference to the accompanying drawings.

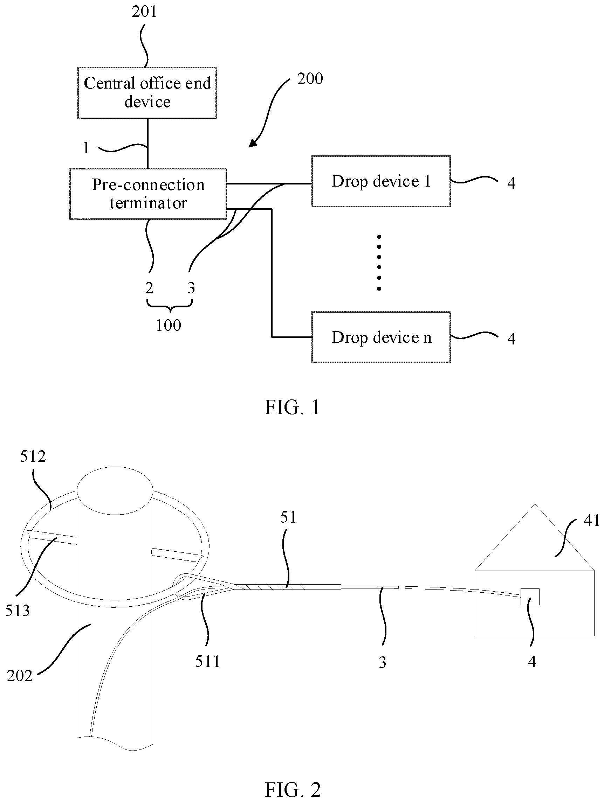

An embodiment of this application provides a drop cable connection system 200. The drop cable connection system 200 is also an optical distribution network system, and is a physical optical transmission passage from a central office end device 201 to a drop device 4 (a terminal device). The drop cable connection system 200 is usually disposed at an outdoor user access point. Referring to a structural block diagram of the drop cable connection system 200 shown in FIG. 1, the drop cable connection system 200 in this application includes: a distribution optical cable 1 and a drop cable connection apparatus 100. The drop cable connection apparatus 100 further includes a pre-connection terminator 2 and a drop cable 3 that are connected to each other.

One end of the distribution optical cable 1 may be connected to the central office end device 201, and the other end may be connected to the pre-connection terminator 2. The pre-connection terminator 2 may be mounted in a wall-mounted manner. For example, the pre-connection terminator 2 may be mounted on a wall. In some other embodiments, the pre-connection terminator 2 may also be mounted in a pole-mounted manner. For example, the pre-connection terminator 2 may be mounted on a fixed pole, and one end of the fixed pole is inserted into the ground, so that the fixed pole is erected relative to the ground.

The drop cable 3 is connected to the pre-connection terminator 2 and the drop device 4, and a quantity of drop cables 3 may be in a one-to-one correspondence with a quantity of drop devices 4, to implement fiber to the home. One end of the drop cable 3 is connected to the pre-connection terminator 2, and the other end is connected to the drop device 4. It should be noted that, in FIG. 1, a continuous solid line is used to represent the drop cable 3, and the continuous solid line represents a signal connection relationship between the drop device 4 and the pre-connection terminator 2, and does not represent that the drop cable 3 is an entire continuous optical cable.

In this embodiment of this application, the pre-connection terminator 2 is configured to transfer and split the distribution optical cable 1 and the drop cable 3, and the pre-connection terminator 2 may also be referred to as a fiber access terminal or a splitting and splicing closure. The drop device 4 is also a terminal device, which, for example, may be an access terminal.

In this embodiment of this application, the drop cable connection system 200 may further include an optical cable armor clamp 5 shown in FIG. 2, to position and fasten the drop cable 3. The optical cable armor clamp 5 is configured to fasten the drop cable 3, and may exert a clamping force to a side that is of the drop cable 3 and that is close to a user 41 under a specific condition, for example, when a tensile force exerted on the drop cable 3 is less than a tensile threshold of the optical cable armor clamp 5, to prevent the drop cable 3 from fluttering relative to the optical cable armor clamp 5.

For example, referring to FIG. 2, the optical cable armor clamp 5 may include a preformed armor rod 51, and the preformed armor rod 51 is wound around an outer side of the drop cable 3, to provide an axial tensile force for the drop cable 3. A tensile threshold of the preformed armor rod 51 is the tensile threshold of the optical cable armor clamp 5. To be specific, when the tensile force exerted on the drop cable 3 is less than the tensile threshold, the preformed armor rod 51 is firmly fastened on the outer side of the drop cable 3. When the tensile force exerted on the drop cable 3 is greater than or equal to the foregoing tensile threshold, the preformed armor rod 51 and the drop cable 3 become loose, and the drop cable 3 may flutter relative to the preformed armor rod 51. In this application, a minimum ultimate tensile force value when the preformed armor rod 51 and the drop cable 3 become loose is referred to as the tensile threshold of the preformed armor rod 51.

In this embodiment of this application, referring to FIG. 2, the optical cable armor clamp 5 may further include a fixed ring 512, and a fixed horizontal bar 513 extending to a circumferential inner side may be further disposed on an inner surface of the fixed ring 512. A connection buckle 511 that can be mounted on the fixed ring 512 may be disposed at a fixed end of the preformed armor rod 51. During the mounting, the fixed ring 512 may be sleeved around the outside of the fixed pole 202, and an inner end of the fixed horizontal bar 513 is fastened to the fixed pole 202, so that the fixed ring 512 is fastened relative to the fixed pole 202. The connection buckle 511 at the fixed end of the preformed armor rod 51 may be sleeved on the fixed ring 512, so that the fixed end of the preformed armor rod 51 may be fastened relative to the fixed pole 202. In addition, the preformed armor rod 51 is wound around the outer side of the drop cable 3, and keeps fastened relative to the drop cable 3, so that the drop cable 3 keeps fastened relative to the fixed pole 202.

It should be understood that, that the drop cable 3 keeps fastened relative to the fixed pole 202 specifically means that the drop cable 3 and the fixed pole 202 may be tilted, twisted, or do the like in posture relative to each other, but the drop cable 3 cannot flutter relative to the fixed pole 202. When a tensile force exerted on a part that is of the drop cable 3 and that is close to the user side is less than the tensile threshold, the tensile force exerted on the part that is of the drop cable 3 and that is close to the user side may be borne by the fixed pole 202, and is not transferred to a side that is of the drop cable 3 and that is close to the pre-connection terminator 2.

It should be noted that, when there are at least two preformed armor rods 51, fixed ends of the at least two preformed armor rods 51 are mounted on the fixed ring 512, and are arranged at intervals in a circumferential direction of the fixed ring 512. In this way, it is convenient to implement a connection between a drop cable 3 and a user 41 in each direction.

In the foregoing technical solution, in a layout process of the drop cable connection system 200, if the drop cable 3 uses an entire continuous brittle-fracture optical cable, the brittle-fracture optical cable is usually unable to reliably fracture brittlely when subjected to an accidental tensile force. As a result, upstream connection devices, such as the fiber access terminal, are vulnerable to damage, and people and houses may also be damaged to different degrees. Consequently, protection is relatively poor.

Therefore, this application provides a drop cable connection system 200, so that with a drop cable 3 that uses a special structure, the drop cable can easily fracture when subjected to accidental pulling or the like, to ensure that a brittle fracturing function of the drop cable may be reliably implemented and high protection is ensured.

It may be understood that the structure schematically shown in this embodiment of this application does not constitute a specific limitation on the drop cable connection system 200. In some other scenarios of this application, the drop cable connection system 200 may include more or fewer units than those shown in the figure.

The following describes a structure of the drop cable connection system 200 by using the drop cable connection system 200 shown in FIG. 1 as an example.

### Embodiments

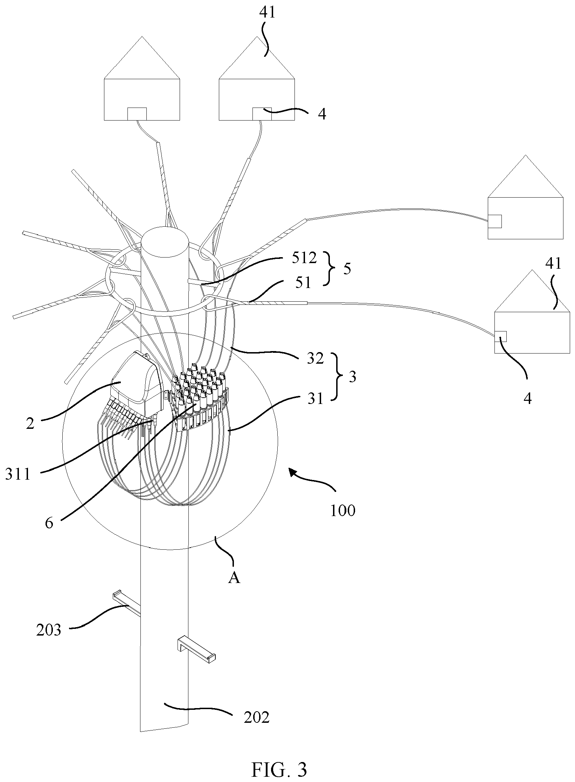

In the embodiments of this application, referring to a schematic structural diagram of an optical cable connection system shown in FIG. 3, as described above, a drop cable connection apparatus includes a pre-connection terminator 2 and a drop cable 3, and the pre-connection terminator 2 may be mounted on a fixed pole 202. Drop cables 3 are determined based on a quantity of users 41, and may have one or more drop cables.

Further, a same drop cable 3 includes a first optical cable section 31 and a second optical cable section 32. In addition, for the same drop cable 3, the first optical cable section 31 and the second optical cable section 32 are in a signal connection. Specifically, one end of the first optical cable section 31 is connected to the pre-connection terminator 2. The other end of the first optical cable section 31 is in a signal connection to one end of the second optical cable section 32.

As described above, the same drop cable 3 is divided into the first optical cable section 31 and the second optical cable section 32 that are connected to each other. When the drop cable 3, especially the second optical cable section 32, is subjected to accidental pulling or the like, a fracture easily occurs at a joint of the first optical cable section 31 and the second optical cable section 32. In this way, an upstream device such as a pre-connection terminator 2 is protected, and a threat to a house or personal safety caused by tilting of the fixed pole 202 can also be prevented.

In the foregoing solution, the signal connection means that the other end of the first optical cable section 31 is directly in contact with and connected to one end of the second optical cable section 32, and the two ends communicate with each other in terms of a signal. To reduce a node loss of the signal connection between the first optical cable section 31 and the second optical cable section 32 as much as possible and ensure relatively high reliability, the other end of the first optical cable section 31 and one end of the second optical cable section 32 may be joined in a hot fusion splicing manner. It should be understood that the connection between the first optical cable section 31 and the second optical cable section 32 includes but is not limited to hot fusion splicing. In some other examples, the first optical cable section 31 and the second optical cable section 32 may be mechanically spliced by using a fiber mechanical connecting terminal, or connected by using an adapter.

For example, the first optical cable section 31 may be a pre-made optical cable. For example, a pre-made connector 311 may be disposed at one end of the first optical cable section 31, to facilitate matching a type of an output interface on the pre-connection terminator 2 and also facilitate plugging and unplugging between the pre-made connector 311 and the output interface on the pre-connection terminator 2.

Further, the other end of the second optical cable section 32 is connected to the drop device 4 Different from the first optical cable section 31, a common optical cable may be selected as the second optical cable section 32. The common optical cable in this application may include two meanings. In addition to the meaning that the second optical cable section 32 is not a pre-made optical cable section, as another possible meaning, the common optical cable may also mean that the second optical cable section 32 is not a brittle-fracture optical cable, which is described later. In this way, compared with the prior art in which the drop cable 3 is an entire pre-made optical cable and is a brittle-fracture optical cable, at least the second optical cable section 32 is a common optical cable. Therefore, costs of the drop cable 3 can be reduced.

It should be noted that, when a common optical cable is used as the second optical cable section 32, a required length of the second optical cable section 32 may also be determined based on an actual distance between the fixed pole 202 and the user 41, and a common optical cable of a corresponding length is cut based on the required length to serve as the second optical cable section 32. Therefore, compared with the prior art in which various pre-made cables of different lengths need to be prepared, this has obvious advantages in terms of goods preparation and procurement.

It may be understood that a drop cable in the prior art usually uses a special structure and material to meet a brittle fracture requirement of the drop cable. However, this causes relatively high costs of the drop cable connection system 200. To resolve this problem, at least one of the first optical cable section 31 and the second optical cable section 32 may use a non-brittle-fracture optical cable. Because at least some optical cable sections use non-brittle-fracture optical cables with relatively low costs, material costs of the optical cable are reduced, thereby reducing connection costs of the optical cable.

It should be noted that, in the embodiments of this application, the brittle fracture (also referred to as brittle-fracture) optical cable means that the optical cable fractures without obvious deformation when subjected to a tensile force with a preset value, and when the optical cable fractures, almost no plastic deformation occurs on the optical cable. In contrast, the non-brittle fracture optical cable means that the optical cable fractures after a large quantity of deformations. A main feature of the non-brittle fracture optical cable is obvious macro plastic deformation, such as excessive elongation or bending of the optical cable, the non-brittle fracture optical cable may also mean a common optical cable used in a general communications layout.

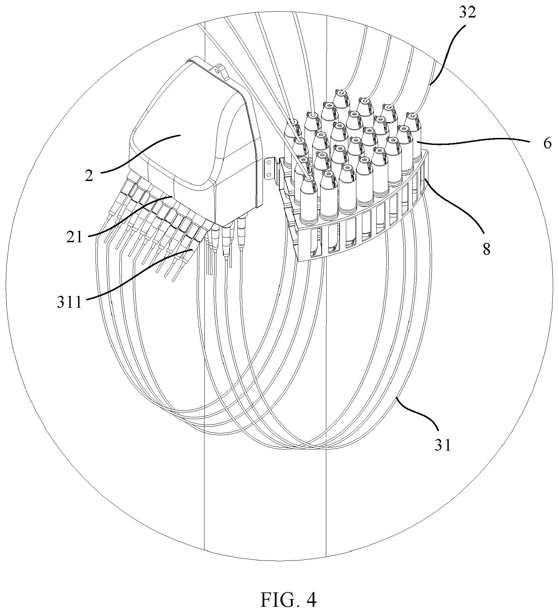

In the embodiments of this application, referring to FIG. 3 and FIG. 4, in a possible implementation, there are at least two drop cables 3, at least two output interfaces 21 are correspondingly disposed on the pre-connection terminator 2, and one output interface 21 is correspondingly connected to one drop cable 3. When a plurality of users 41 need to be connected, a plurality of drop cables 3 may be used to respectively connect to different users 41.

In the embodiments of this application, the drop cable connection apparatus 100 may further include a retainer 6 that at least positions the joint of the first optical cable section 31 and the second optical cable section 32, and the retainer 6 is fastened relative to the pre-connection terminator 2. Certainly, in some other examples, the drop cable connection apparatus 100 may further include a support bracket 8 that is fastened relative to the pre-connection terminator 2, and the retainer 6 may be disposed on the support bracket 8.

This is because the drop cable connection apparatus 100 is disposed in an outdoor overhead scenario, the drop cable 3 is prone to shake, and the retainer 6 may be used to maintain the joint of the first optical cable section 31 and the second optical cable section 32. This prevents the joint of the first optical cable section 31 and the second optical cable section 32 from fracturing when no predetermined tensile force is exerted. It should be understood that, when retaining the first optical cable section 31 and the second optical cable section 32, the protector actually exerts a specific clamping force on each of the first optical cable section 31 and the second optical cable section 32. A value of the clamping force, especially the clamping force of the retainer 6 on the second optical cable section 32, may be set to a second preset retaining force.

To make the pre-connection terminator 2 and the retainer 6 fastened relative to each other, both the pre-connection terminator 2 and the support bracket 8 may be fixedly mounted on the fixed pole 202. For example, the pre-connection terminator 2 and the support bracket 8 may be located at positions with a same height in an axial direction of the fixed pole 202, and the pre-connection terminator 2 and the support bracket 8 are spaced apart at different positions in a circumferential direction of the fixed pole 202. It may be understood that the first optical cable section 31 is located between the pre-connection terminator 2 and the retainer 6, and the second optical cable section 32 is located between the retainer 6 and the drop device 4.

In some other instances, a pedal 203 may be further disposed at some positions that are of the fixed pole 202 and that are close to the ground, so that operating personnel can easily step on the pedal 203 to climb to a top end part of the fixed pole 202 to perform mounting work.

It should be understood that, the quantity of drop cables 3 depends on the quantity of users 41. FIG. 3 and FIG. 4 show that the pre-connection terminator 2 has 24 output interfaces 21, and correspondingly there are 24 retainers 6, which is applicable to setup of a majority of 24 drop cables 3. In the figures, eight drop cables are used as an example for description. The case in which the quantity of drop cables 3 is another quantity is similar to this case. Details are not described herein.

In the embodiments of this application, one end of the second optical cable section 32 is located in the retainer 6, and the other end of the second optical cable section 32 may be connected to the drop device 4 in the home of the user 41. In addition, the second optical cable section 32 may further keep fastened relative to the fixed pole 202 by using the optical cable armor clamp 5. For example, the fixed ring 512 in the optical cable armor clamp 5 is mounted on the fixed pole 202, one end of the preformed armor rod 51 is sleeved in the fixed ring 512, and the second optical cable section 32 may be threaded in and be wound by the preformed armor rod 51.

The drop cable connection apparatus 100 described above may further have a brittle-fracturing function of the drop cable 3. For example, an ultimate tensile force borne by the drop cable 3 may be referred to as a first preset tensile force value. The ultimate tensile force specifically means a maximum ultimate tensile force value that does not cause damage to an upstream device such as the pre-connection terminator 2 by the drop cable 3 and does not cause the fixed pole 202 to tilt. In other words, when the second optical cable section 32 is subjected to a tensile force greater than or equal to the first preset tensile force value, the drop cable 3 needs to fracture for safety.

In the embodiments of this application, when a tensile force exerted on a side that is of the second optical cable section 32 and that is close to the user 41 is greater than or equal to the tensile threshold of the optical cable armor clamp 5, for example, the tensile threshold of the preformed armor rod 51, the second optical cable section 32 may flutter relative to the optical cable armor clamp 5. In addition, in the second optical cable section 32, when a part between the preformed armor rod 51 and the retainer 6 is subjected to a tensile force greater than the second preset retaining force, the second optical cable section 32 may flutter towards an axial outer side of the retainer 6 relative to the joint of the first optical cable section 31 and the second optical cable section 32.

Therefore, as a possible implementation, when the drop cable connection system includes the optical cable armor clamp 5 and the retainer 6, if the first preset tensile force value is enabled to be equal to the tensile threshold of the optical cable armor clamp 5, and the first preset tensile force value is enabled to be greater than or equal to the second preset retaining force exerted by the retainer 6 on the second optical cable section 32, a brittle-fracturing function of the drop cable 3 can be implemented.

For example, when a tensile force exerted on a part that is of the second optical cable section 32 and that is close to the user 41 is less than the first preset tensile force value, the tensile force is borne by the fixed pole 202, and the preformed armor rod 51 may position and fasten the second optical cable section 32. When the tensile force exerted on the part that is of the second optical cable section 32 and that is close to the user 41 is greater than the first preset tensile force value, the preformed armor rod 51 unfastens the second optical cable section 32, and the second optical cable section 32 may flutter relative to the optical cable armor clamp 5. The tensile force may be transferred to a position that is in the second optical cable section 32 and that is close to the retainer 6. In this case, because the tensile force exerted on the second optical cable section 32 is greater than or equal to the second preset retaining force value exerted by the retainer 6 on the second optical cable section 32, the second optical cable section 32 flutters relative to the retainer 6, and the tensile force exerted on the second optical cable section 32 is transferred to a position of the joint of the second optical cable section 32 and the first optical cable section 31. Because the first optical cable section 31 is also retained by the retainer 6, or the first optical cable section 31 is connected to the pre-connection terminator 2, the tensile force exerted on the second optical cable section 32 is transferred to the joint of the second optical cable section 32 and the first optical cable section 31, and enables the joint to fracture. Equivalently, the drop cable has brittlely fractured.

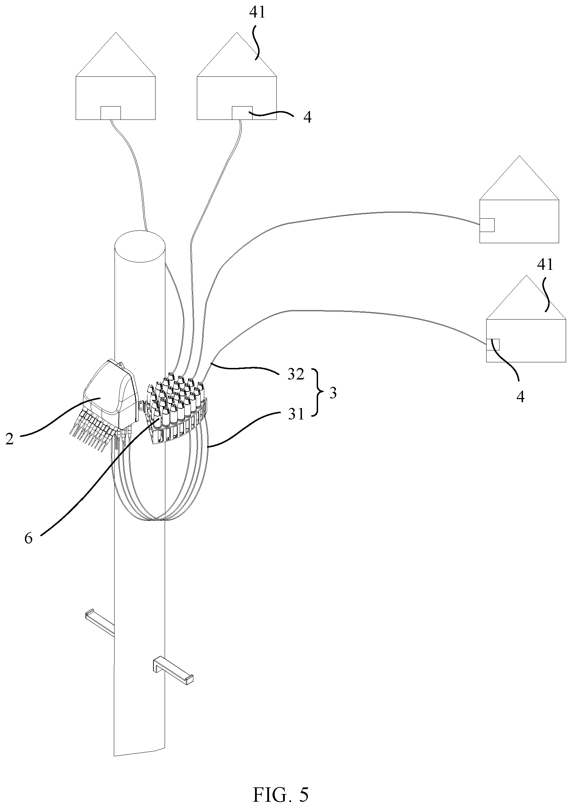

In some other examples, the optical cable armor clamp 5 may also be removed, and the retainer 6 is directly used to clamp the drop cable 3, so that the drop cable 3 brittlely fractures. For example, referring to a schematic diagram of a drop cable connection system of another structure shown in FIG. 5, an example in which there are four drop cables 3 is used for description. A difference from FIG. 4 lies in that the drop cable connection system does not include the optical cable armor clamp 5, the second optical cable section 32 penetrates through the retainer 6, and the other end of the second optical cable section 32 is directly connected to the drop device 4 of the user 41. In the solution shown in FIG. 5, if the first preset tensile force value is enabled to be equal to the second preset retaining force exerted by the retainer 6 on the second optical cable section 32, a brittle-fracturing function of the drop cable 3 can be implemented.

For example, when a tensile force exerted on a part that is of the second optical cable section 32 and that is close to the user 41 is less than the first preset tensile force value, the tensile force is borne by the fixed pole 202, and the preformed armor rod 51 may position and fasten the second optical cable section 32. When the tensile force exerted on the part that is of the second optical cable section 32 and that is close to the user 41 is greater than the first preset tensile force value, the retainer 6 releases a retaining force exerted on the second optical cable section 32. Therefore, the second optical cable section 32 flutters relative to the retainer 6, and the tensile force exerted on the second optical cable section 32 is transferred to a position of the joint of the second optical cable section 32 and the first optical cable section 31. Because the first optical cable section 31 is also retained by the retainer 6, or the first optical cable section 31 is connected to the pre-connection terminator 2, the tensile force exerted on the second optical cable section 32 is transferred to the joint of the second optical cable section 32 and the first optical cable section 31, and enables the joint to fracture. Equivalently, the drop cable 3 brittlely fractures.

In the embodiments of this application, as described above, in a same drop cable 3, the first optical cable section 31 is located between the pre-connection terminator 2 and the retainer 6, and the second optical cable section 32 is located between the retainer 6 and the drop device 4. Therefore, for different drop cables 3, a length of a second optical cable section 32 depends on a distance between a retainer 6 and a device of a user 41, and a length of a first optical cable section 31 depends on a distance between a pre-connection terminator 2 and a retainer 6. For example, lengths of first optical cable sections 31 of drop cables 3 corresponding to a same pre-connection terminator 2 may be approximately the same, or slightly different, to reduce workload of goods preparation and procurement at an early stage as much as possible.

In the embodiments of this application, quantities of pre-connection terminators 2, retainers 6, and support brackets 8 each include but are not limited to one, for example, may be two or more. When there are three or more pre-connection terminators 2, retainers 6, and support brackets 8, the setting thereof is similar to that when the quantity is two. Details are not described herein.

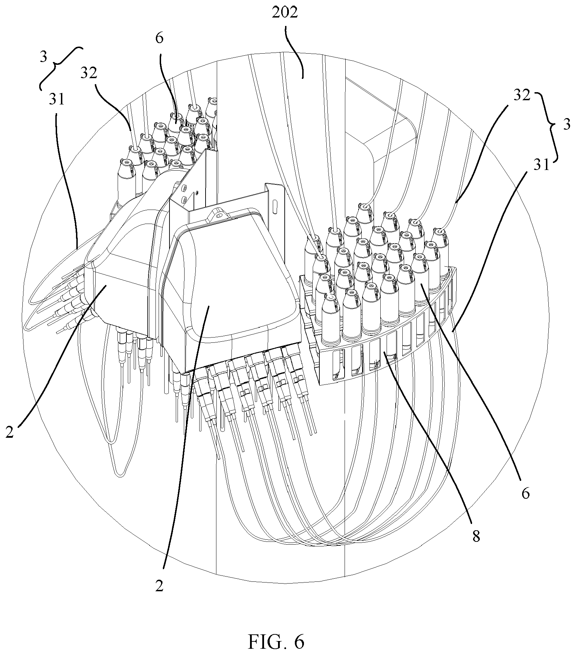

For example, referring to FIG. 6, two pre-connection terminators 2 are disposed on the fixed pole 202, and one support bracket 8 and one group of retainers 6 that are carried on the support bracket 8 are correspondingly disposed on each pre-connection terminator 2. The two pre-connection terminators 2 may be arranged adjacently in the circumferential direction of the fixed pole 202, and the two support brackets 8 and respective pre-connection terminators 2 are separately arranged adjacently in the circumferential direction.

A pre-connection terminator 2 and retainers 6 on the right side of FIG. 6 are used as an example for description. In FIG. 6, there are 24 retainers 6, which may be used for connection of 24 drop cables 3. Herein, connection of seven drop cables 3 is used as an example for description, where a first optical cable section 31 of a same drop cable 3 is connected between one end of a pre-connection terminator 2 and one end of a retainer 6 that correspond to each other, and after a joint of the first optical cable section 31 and a second optical cable section 32 of the same drop cable 3 is hot fusion spliced, the other end of the second optical cable section 32 penetrates through the retainer 6 and is connected to a drop device 4. A connection manner between a pre-connection terminator 2 and corresponding retainers 6 on the left side of the figure is the same as that between the pre-connection terminator 2 and the corresponding retainers 6 on the right side. After persons skilled in the art read the foregoing connection manner, the connection manner of the pre-connection terminator 2 on the left side may be apparently inferred. Details are not described herein.

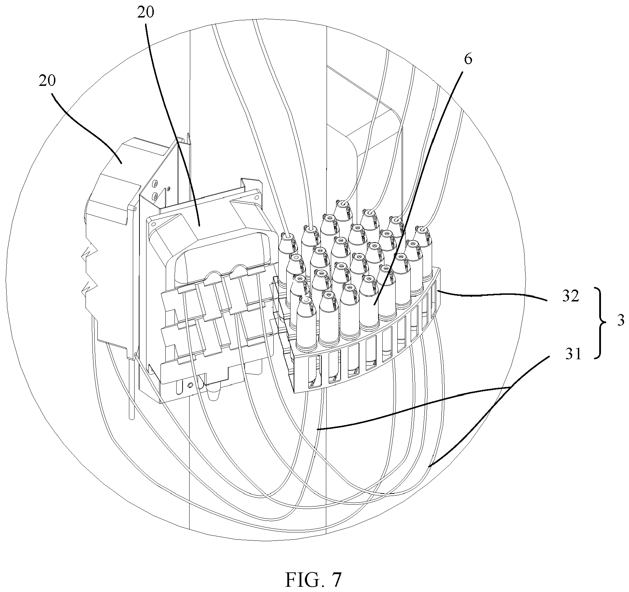

In some other examples, alternatively, two pre-connection terminators 2 may correspond to one support bracket 8. For example, referring to FIG. 7, a model of a pre-connection terminator 20 is different from that of the pre-connection terminator 2, and the pre-connection terminator 20 has a smaller quantity of output interfaces 21. In this case, every two pre-connection terminators 20 may correspond to one support bracket 8, and a plurality of retainers 6 may be disposed on the support bracket 8. It should be noted that a first optical cable section 31 and a second optical cable section 32 of a same drop cable 3 correspond to a same retainer 6.

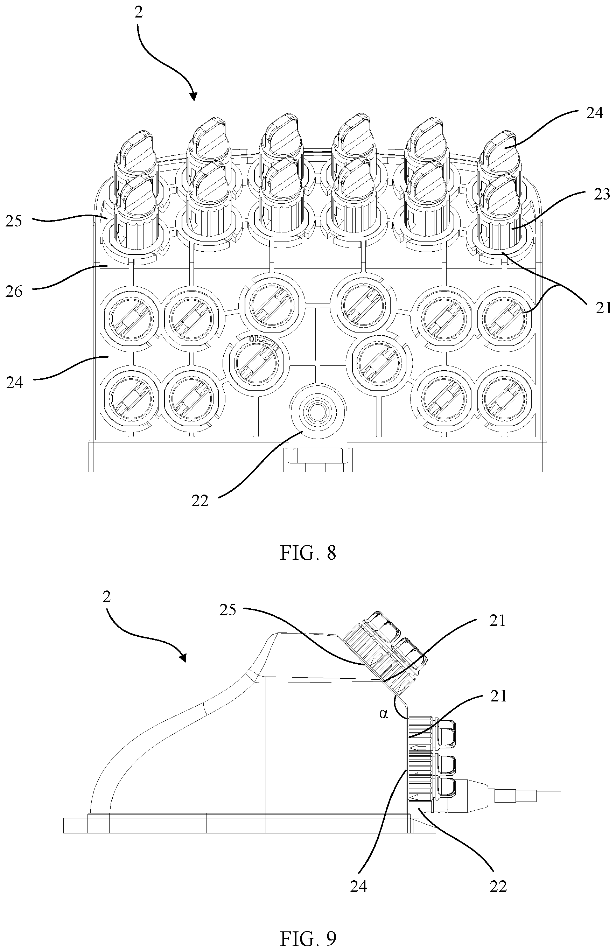

In the embodiments of this application, referring to FIG. 8 and FIG. 9, a pre-connection terminator 2 may include a hollow box body 26, and an input interface 22 and at least two output interfaces 21 are disposed on the box body 26. For example, an optical fiber fusion splicing area may be disposed in the box body 26, and the optical fiber fusion splicing area has a distribution plate configured to implement branching and transferring among the input interface 22 and the output interfaces 21. The input interface 22 is configured to be connected to a distribution optical cable, and the at least two output interfaces 21 are configured to be correspondingly connected to pre-made connectors 311 of first optical cable sections 31.

Further, a fiber adapter 23 and a dustproof cap 28 capping the outside of the fiber adapter 23 are further disposed on the output interface 21. A side that is of the fiber adapter 23 and that is inside the box body 26 is connected to the distribution plate, and a side that is of the fiber adapter 23 and that is outside the box body 26 is configured to be plug-connected to the pre-made connector 311 on the first optical cable section 31. When the fiber adapter 23 is not connected to the pre-made connector 311, the dustproof cap 28 covers an outer end of the fiber adapter 23, to prevent dust and sundries from entering the fiber adapter 23.

In the embodiments of this application, the fiber pre-connection terminator 2 may have a first mounting surface 24 and a second mounting surface 25thereon, and at least one output interface 21 is disposed on each of the first mounting surface 24 and the second mounting surface 25. A range of an included angle α between the first mounting surface 24 and the second mounting surface 25 is 0° < α < 180°.

The first mounting surface 24 and the second mounting surface 25 may be located on an outer surface of the box body 26. Both the first mounting surface 24 and the second mounting surface 25 have an output interface 21 thereon, and the first mounting surface 24 and the second mounting surface 25 tilt to each other. In this way, difficulty in mounting the first optical cable section 31 and the pre-connection terminator 2 can be reduced. This is because, as in the prior art, if all the output interfaces 21 are disposed on mounting surfaces of a same plane, among all output interfaces 21, plug-connection operations of output interfaces 21 located in the middle inner part and plug-connection operations of output interfaces 21 near the output interfaces 21 affect each other, which is inconvenient for operation.

It may be understood that, if two mounting surfaces tilting to each other are disposed on the box body 26, the at least two output interfaces 21 may be divided into two groups, and each group of output interfaces is fastened to one mounting surface. In this way, at least mounting of pre-made connectors 311 corresponding to different groups of output interfaces 21 does not interfere with each other, thereby reducing difficulty in mounting the first optical cable section 31 and the pre-connection terminator 2.

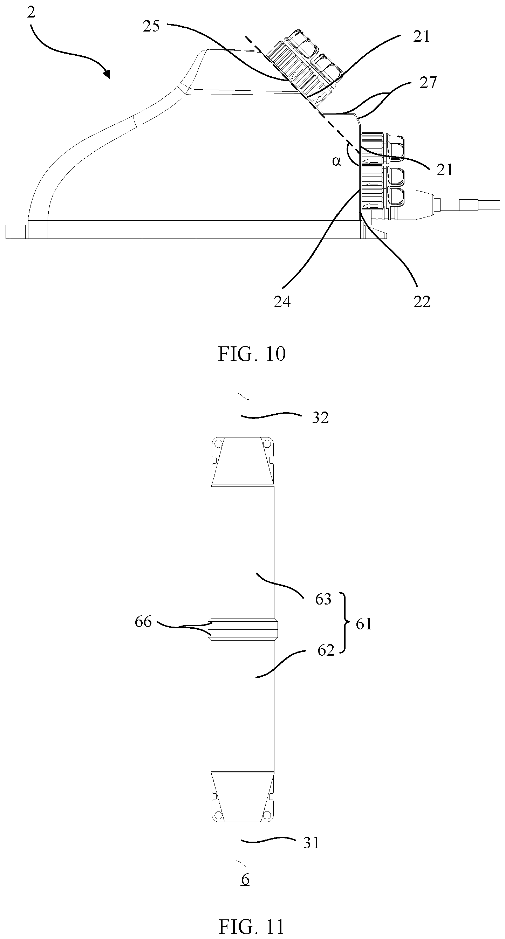

Relative positions between the first mounting surface 24 and the second mounting surface 25 include but are not limited to an adjacent position shown in FIG. 8 and FIG. 9. Alternatively, as shown in FIG. 10, a transitional surface 27 is made between contour edges of the first mounting surface 24 and the second mounting surface 25. The first mounting surface 24 and the second mounting surface 25 have a specific spacing in a height direction of the box body 26, and an included angle between the first mounting surface 24 and the second mounting surface 25 is still α. In this way, the first mounting surface 24 and the second mounting surface 25 are relatively far away from each other, which is more conducive to reducing difficulty in mounting the first optical cable section 31 and the pre-connection terminator 2.

In the embodiments of this application, after a pre-made connector 311 at one end of a first optical cable section 31 is plug-connected to a corresponding fiber adapter 23, the other end of the first optical cable section 31 is in a signal connection to one end of a second optical cable section 32, and a joint of the first optical cable section 31 and the second optical cable section 32 is located in the retainer 6.

In the embodiments of this application, referring to a schematic structural diagram of an appearance of a retainer 6 shown in FIG. 11, the retainer 6 may include a protective housing 61 located on an outermost side. For example, the protective housing 61 may further include a first housing 62 and a second housing 63, an interior of each of the first housing 62 and the second housing 63 is of a hollow structure with an opening, and the opening of the first housing 62 and the opening of the second housing 63 are opposite to each other, to jointly enclose an accommodation space. Certainly, the first housing 62 and the second housing 63 may be joined in a common connection manner, for example, in a threaded connection manner. Two optical cable through holes are disposed on the protective housing 61, and the two optical cable through holes may be respectively disposed at an end part that is of the first housing 62 and that deviates from the opening and an end part that is of the second housing 63 and that deviates from the opening, the two optical cable through holes are respectively used for the first optical cable section 31 and the second optical cable section 32 to penetrate through.

Further, stoppers 66 are further disposed at the openings of the first housing 62 and the second housing 63. In this way, when the retainer 6 is positioned on the support bracket 8, the stoppers 66 may stop and be disposed outside at least a partial structure of the support bracket 8, to limit downward displacement of the retainer 6.

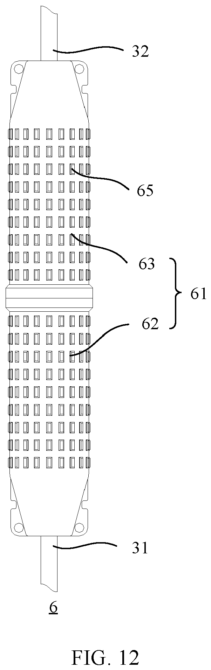

In the embodiments of this application, referring to a retainer 6 of another structure in FIG. 12, to facilitate a mounting operation and the like of the retainer 6, an outer surface of the retainer 6, namely, an outer surface of a protective housing 61, may have a protruding protrusion 65. In this way, a friction force between a hand and the protective housing 61 can be increased during a rotation operation of a protector, thereby facilitating an operation.

An external contour shape of the protrusion 65 includes but is not limited to a truncated cone shape shown in FIG. 12, and a cross-section shape of the protrusion 65 may also be a circle, a triangle, or the like. Positions at which the protrusion 65 is disposed include but are not limited to surrounding the outer surface of the entire protective housing 61. Because a holding part of the protector held by a hand is mainly on the second housing 63 during mounting of the protector, the protrusion 65 may be disposed only on the second housing 63.

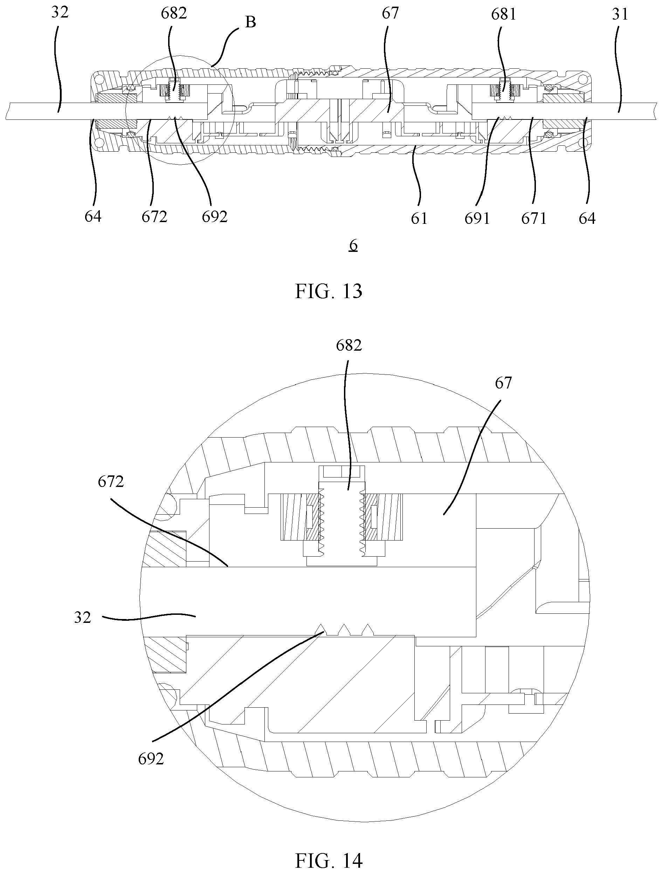

In the embodiments of this application, referring to sectional views of a retainer 6 in FIG. 13 and FIG. 14, the retainer 6 may further include a support 67, and the support 67 may be disposed in an accommodation space in a protective housing 61. A first passage 671 that can be penetrated into by a first optical cable section 31 is disposed on the support 67, a second passage 672 that can be penetrated into by a second optical cable section 32 is further disposed inside the support 67, and a joint (not shown in the figure) of the first optical cable section 31 and the second optical cable section 32 is located on the support 67.

The first passage 671 may support a part that is of the first optical cable section 31 and that is close to the joint, and the second passage 672 may support a part that is of the second optical cable section 32 and that is close to the joint. Further, the joint of the first optical cable section 31 and the second optical cable section 32 is further located on the support 67. Therefore, the support 67 may keep the part that is of the first optical cable section 31 and that is close to the joint, the joint, and the part that is of the second optical cable section 32 and that is close to the joint fastened relative to each other, and no relative displacement occurs, to ensure stability of signal transmission between the first optical cable section 31 and the second optical cable section 32.

The first passage 671 and the second passage 672 may be disposed coaxially, so that the first optical cable section 31 and the second optical cable section 32 keep coaxial. In addition, the first passage 671 and the second passage 672 may communicate with each other or may not communicate with each other.

In a possible implementation, the retainer 6 further includes a first fastener 681 and a second fastener 682 that are disposed on the support 67. The first fastener 681 may be located in the first passage 671, and abut against the first optical cable section 31, so that the first optical cable section 31 is pressed against an inner wall of the first passage 671. The second fastener 682 may be located in the second passage 672, and abut against the second optical cable section 32, so that the second optical cable section 32 is pressed against an inner wall of the second passage 672. As described above, the first fastener 681 presses the first optical cable section 31 against the inner wall of the first passage 671, and the second fastener 682 presses the second optical cable against the inner wall of the second passage 672, so that the first optical cable section 31 and the second optical cable section 32 can be fastened more firmly, which is equivalent to: the support 67 exerts a specific clamping force on the entire drop cable 3.

The first fastener 681 may be, for example, a screw. A tail of the screw is embedded and is thread-connected inside the inner wall of the first passage 671. A head of the screw is exposed to the first passage 671, and may abut against the first optical cable section 31, and the first optical cable section 31 is made abut against the inner wall of the first passage 671. It may be understood that, a length exposed to the first passage 671 by the head of the screw may be used to adjust a value of an abutting force, namely, a clamping force, of the screw on the first optical cable section 31. In the embodiments of this application, to further enhance a clamping effect on the first optical cable section 31, a pressing protrusion 691 may be further disposed at a position that is on the inner wall of the first passage 671 and that is opposite to the screw. When the screw abuts against the first optical cable section 31, the first optical cable section 31 may be pressed against the pressing protrusion 691.

In the embodiments of this application, the second fastener 682 may also be, for example, a screw. A tail of the screw is embedded and is thread-connected inside the inner wall of the second passage 672. A head of the screw is exposed to the second passage 672, and may abut against the second optical cable section 32, and the second optical cable section 32 is made abut against the inner wall of the second passage 672. It may be understood that, a length exposed to the second passage 672 by the head of the screw may be used to adjust a value of an abutting force, namely, a clamping force, of the screw on the second optical cable section 32.

In the embodiments of this application, to further enhance a clamping effect on the second optical cable section 32, a pressing protrusion 692 may be further disposed at a position that is on the inner wall of the second passage 672 and that is opposite to the screw. When the screw abuts against the first and second optical cable sections, the second optical cable section 32 may be pressed against the pressing protrusion 692.

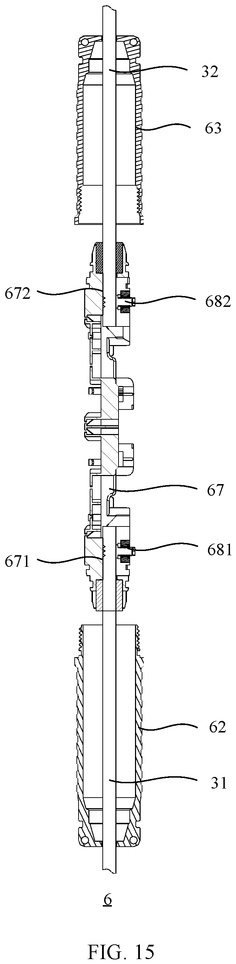

In the embodiments of this application, the protective housing 61 is disposed as a structure including the first housing 62 and the second housing 63, to facilitate connection between the first optical cable section 31 and the second optical cable section 32. Referring to FIG. 15, a step of connecting the retainer 6 to the first optical cable section 31 and the second optical cable section 32 includes:
moving the first housing 62 in a direction away from the second optical cable section 32 along the first optical cable section 31, and moving the second housing 63 in a direction away from the first optical cable section 31 along the second optical cable section 32, so that the first housing 62 and the second housing 63 are separated from each other, and the support 67 is exposed;
joining, in a hot fusion splicing manner, end parts that are of the first optical cable section 31 and the second optical cable section 32 and that are adjacent to each other, and disposing a joint of the first optical cable section 31 and the second optical cable section 32 on the support 67;
adjusting the first fastener 681, so that the first fastener 681 extends into the first passage 671, and the first fastener 681 is made abut against the inner wall of the first passage 671, and adjusting the second fastener 682, so that the second fastener 682 extends into the second passage 672, and the second fastener 682 is made abut against the inner wall of the second path 672, in other words, clamping of the first optical cable section 31 and the second optical cable section 32 is completed; and
moving the first housing 62 and the second housing 63 in a direction of approaching each other to get in contact with each other, and thread-connecting the first housing 62 and the second housing 63 to each other, to enclose the joint of the first optical cable section 31 and the second optical cable section 32 in a relatively enclosed accommodation space.

In the embodiments of this application, after the first optical cable section 31 and the second optical cable section 32 of the drop cable 3 are joined and clamped in the retainer 6, the retainer 6 further needs to be fastened on the support bracket 8.

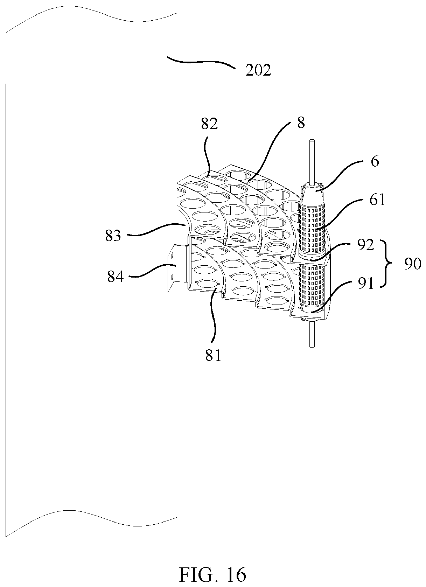

FIG. 16, FIG. 17, and FIG. 18 are respectively an exploded view of a support bracket 8, a top view of the support bracket 8, and a schematic diagram of mounting the retainer 6 on the support bracket 8. Referring to FIG. 16, FIG. 17, and FIG. 18, the support bracket 8 may include a first support plate 81 and a second support plate 82 that are spaced apart from each other and that are disposed opposite to each other. Two opposite edge parts of the first support plate 81 and the second support plate 82 may be connected by using a connection side plate 83, to form a body of the support bracket 8. Such a structure facilitates lightweight of the support bracket 8.

In some embodiments, at least one lifting lug 84 is further disposed on the connection side plate 83, the lifting lug 84 is mounted on the fixed pole 202, and the support bracket 8 may be fastened on the fixed pole 202. It may be understood that a shape that is of the connection side plate 83 and that is close to the fixed pole 202 may match a shape of an outer surface of the fixed pole 202. In this way, a distance between the connection side plate 83 and the fixed pole 202 can be reduced, thereby reducing a space occupied by the entire apparatus. It may be understood that a cross section of the support bracket 8 may be set to a fan shape. In this way, when a plurality of support brackets 8 are disposed in parallel in a circumferential direction of the fixed pole 202, a spacing formed between the support brackets 8 may be relatively small, to fully use space.

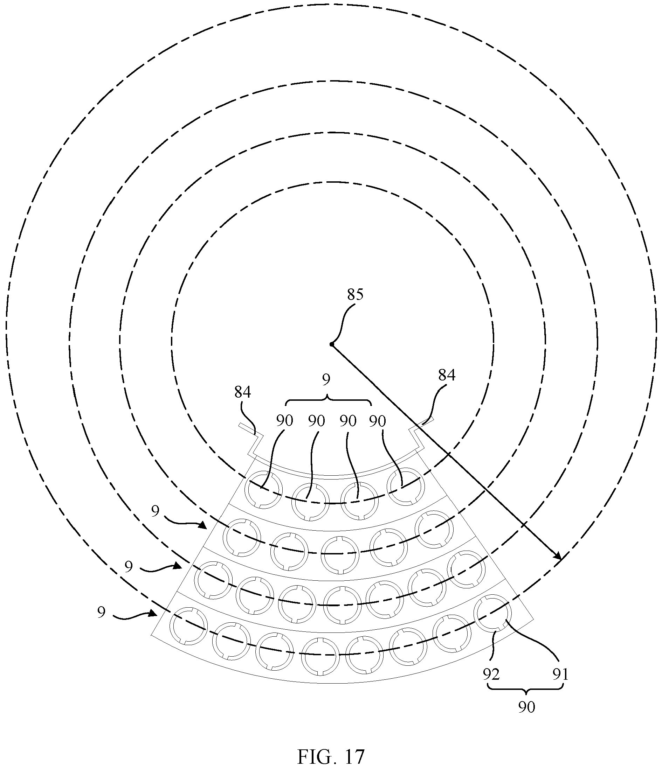

In the embodiments of this application, referring to FIG. 16 and FIG. 17, to fasten the long-strip-shaped retainer 6, at least two positioning structure groups 9 may be disposed on the support bracket 8, each positioning structure group 9 includes at least two positioning structures 90, and each positioning structure 90 is configured to position one retainer 6. All positioning structures 90 in each positioning structure group 9 are arranged on a same arc, and arcs corresponding to different positioning structure groups 9 are concentric and have different radiuses.

It may be understood that, in a scenario in which drop cables 3 are overhead, most retainers 6 enclose the fixed pole 202 used for overhead deployment of the drop cable 3, and are located in an annular space. In the support bracket 8, if all the positioning structures 90 in the positioning structure groups 9 are arranged on a same arc, arcs corresponding to different positioning structure groups 9 are concentric, and a center of the arcs may coincide with an axis of the fixed pole 202. In this way, the positioning structures 90 between the positioning structure groups 9 can maintain a similar relative distance from each other, and the annular space can be fully used, thereby facilitating mounting of the retainers 6 and the support bracket 8. Certainly, the arrangement of the positioning structures 90 in the positing structure groups includes but is not limited to the foregoing annular arrangement, and may further be an array arrangement or the like.

In the embodiments of this application, referring to FIG. 16 and FIG. 17, each positioning structure 90 includes a first mounting via hole 91 and a second mounting via hole 92 that are respectively disposed on the first support plate 81 and the second support plate 82, and the retainer 6 is threaded in the first mounting via hole 91 and the second mounting via hole 92 of the positioning structure 90. For example, the first mounting via hole 91 and the second mounting via hole 92 may be located at positions with different heights in an axial direction of the fixed pole 202.

It may be understood that, to help the retainer 6 be threaded in both the first mounting via hole 91 and the second mounting via hole 92, an outer contour shape of the protective housing 61 needs to match a hole edge shape of the first mounting via hole 91 and a hole edge shape of the second mounting via hole 92. For example, if it is intended to fasten the bottom of the retainer 6 by using the first mounting via hole 91, the hole edge shape of the first mounting via hole 91 may match an outer contour shape of the bottom of the retainer 6. If it is intended to fasten the middle of the retainer 6 by using the second mounting via hole 92, a hole edge shape of the second mounting via hole 92 may match an outer contour shape of the middle of the retainer 6. If it is intended to clamp a stopper 66 on an upper end surface of the second mounting via hole 92, the edge shape of the second mounting via hole 92 may be made smaller than an outer contour shape of the stopper 66. It should be noted that persons skilled in the art may infer, according to the foregoing technical solution, another position at which each mounting via hole is configured to fasten the protector or a case in which an outer contour shape of the protector is another shape. Details are not described herein.

In the embodiments of this application, as described above, the first mounting via hole 91 and the second mounting via hole 92 respectively position the bottom and the middle of the retainer 6, and a diameter of the bottom of the retainer 6 is less than a diameter of the middle. Therefore, an inner diameter of the first mounting via hole 91 is less than an inner diameter of the second mounting via hole 92.

In the embodiments of this application, referring to FIG. 17, quantities of positioning structures 90 included in the positioning structure groups 9 may gradually increase in a direction (a black straight line arrow) from a center of the arc 85 to the outside of the center of the arc. This is because in the scenario in which the drop cables 3 are overhead, most retainers 6 enclose an annular space around the fixed pole. If quantities of positioning structures 90 are made gradually increase in a direction from the center of the arc to the outside of the center of the arc. In this way, the annular space can be fully used in space arrangement of the retainers 6.

In the support bracket 8 shown in FIG. 17, the quantities of positioning structures 90 included in the different positioning structure groups 9 are respectively 4, 5, 7, and 8 in the direction from the center of the arc 85 to the outside of the center of the arc. However, the quantities of positioning structures 90 included in the positioning groups include but are not limited to the foregoing quantity, provided that a condition that the quantities of positioning structures 90 gradually increase in the direction from the center of the arc to the outside of the center of the arc is met. The quantities may alternatively be flexibly set according to an actual setting requirement, and the quantities of positioning structure groups include but are not limited to four, or may be another quantity. Details are not described herein.

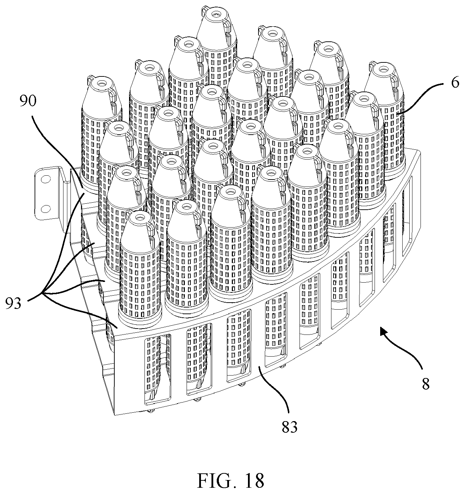

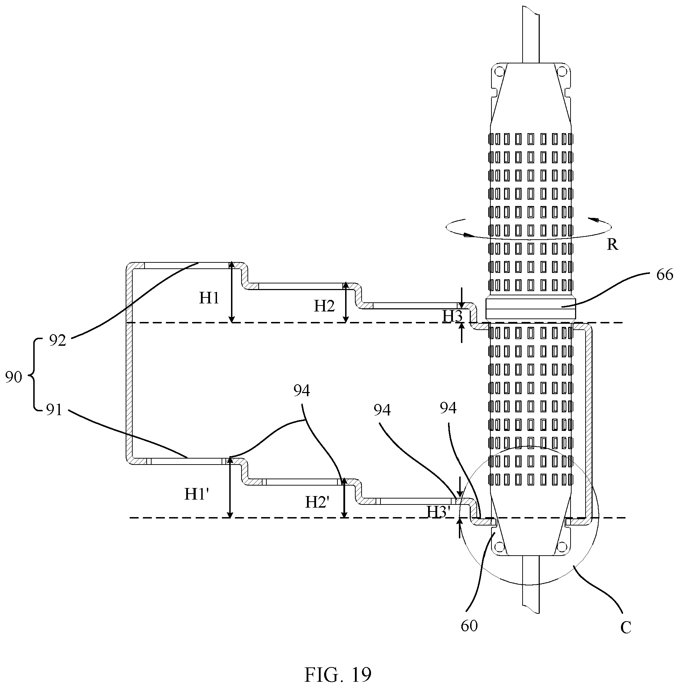

In the embodiments of this application, referring to FIG. 18 and FIG. 19, heights of upper ends of positioning structures 90 included in different positioning structure groups 9 may further gradually decrease in a direction from a center of the arc to outside of the center of the arc. For example, a plurality of step parts 93 are disposed on an upper end surface of the second support plate 82, a quantity of step parts 93 may correspond to a quantity of positioning structure groups 9, and second mounting via holes 92 of positioning structures 90 included in a same positioning structure group 9 are all disposed on upper end surfaces of the step parts 93. Therefore, if heights of upper end parts of the second mounting via holes 92 included in each positioning structure group 9 are H1, H2, and H3 respectively, H1, H2, and H3 gradually decrease in the direction from the center of the arc to the outside of the center of the arc. Herein, the heights H1, H2, and H3 only need to be relative to a same measurement benchmark, which may be a top end surface of the lowest second mounting via hole 92 in the figure.

It may be understood that the foregoing solution is particularly applicable to a case in which there are a plurality of retainers 6 and a spacing between the retainers 6 is relatively small. In this case, mounting heights of the positioning structures 90 that belong to the different positioning structure groups 9 on the support bracket 8 are different. Correspondingly, mounting heights of retainers 6 located on different arcs gradually decrease from inside to outside, thereby facilitating mounting of the retainers 6 and the support bracket 8.

Further, heights of top end parts of first mounting via holes 91 included in different positioning structure groups may gradually decrease in the direction from the center of the arc to the outside of the center of the arc. For example, a plurality of step parts 94 are disposed on an upper end surface of the first support plate 81, a quantity of step parts 94 may correspond to a quantity of positioning structure groups 9, and first mounting via holes 91 of positioning structures 90 included in a same positioning structure group 9 are all disposed on top end surfaces of the step parts 94. Therefore, if heights of top end parts of the first mounting via holes 91 included in each positioning structure group 9 are H1', H2', and H3' respectively, H1', H2', and H3' gradually decrease in the direction from the center of the arc to the outside of the center of the arc. Herein, the heights H1', H2', and H3' only need to be relative to a same measurement benchmark, which may be a top end surface of the lowest first mounting via hole 91 in the figure.

In the embodiments of this application, the retainer 6 may be clamped to at least one of the first mounting via hole 91 and the second mounting via hole 92. That the retainer 6 is clamped to the first mounting via hole 91 is used as an example below for description. A case in which the retainer 6 is clamped to the second mounting via hole 92 is similar to this. After persons skilled in the art read the following technical solution, a technical solution in which the retainer 6 is clamped to the first mounting hole may be apparently inferred. Details are not described herein.

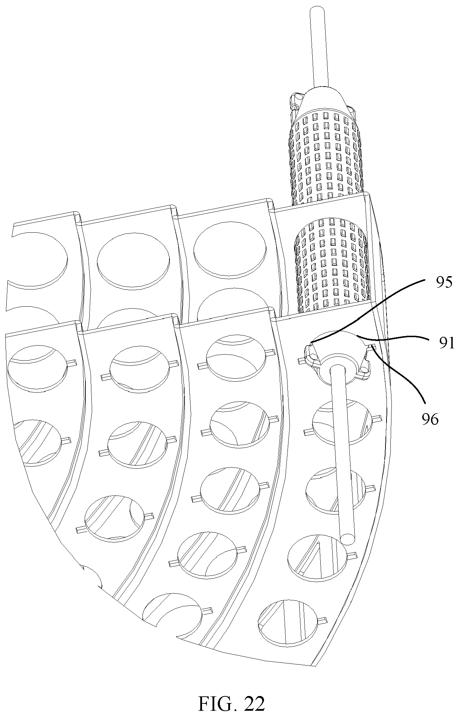

In the embodiments of this application, as shown in FIG. 19, FIG. 20, FIG. 21, and FIG. 22, a first mounting via hole 91 is clamped to a retainer 6, a first clamping stop part 60 is disposed on an outer wall of the retainer 6, and a first avoidance notch 96 is disposed on a hole wall of the first mounting via hole 91, so that the first avoidance notch 96 avoids movement of the first clamping stop part 60 in a process in which the retainer 6 penetrates into the first mounting via hole 91. As shown in FIG. 22, the first clamping stop part 60 has a concave first clamping stop groove 95 to correspond to the first mounting via hole 91, and the first clamping stop groove 95 may be clamped at edges of two axial apertures of the first mounting via hole 91.

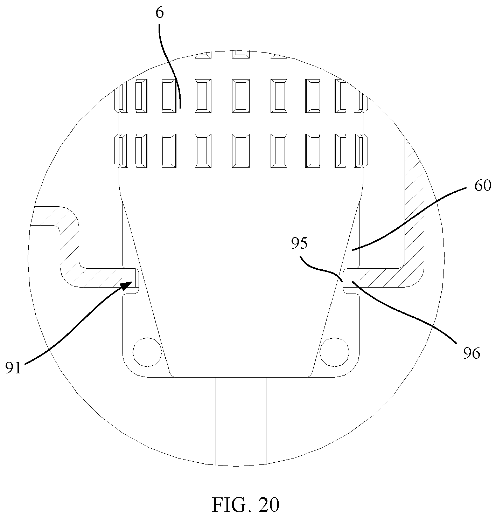

It may be understood that the first avoidance notch 96 on the first mounting via hole 91 may make the retainer 6 and the first clamping stop part 60 smoothly penetrate into the first mounting via hole 91. If the retainer 6 is rotated in an R direction shown in FIG. 19, two roughly horizontal groove walls of the first clamping stop groove 95 may be shown in FIG. 20. The first clamping stop groove 95 is clamped at edges of two axial apertures of the first mounting via hole 91, in other words, the first mounting via hole 91 can be clamped to the retainer 6.

In some other examples, alternatively, the first clamping stop part 60 may have a first protruding part that corresponds to the first mounting via hole 91, an inner hole wall of the first mounting via hole 91 may have a groove that corresponds to the first protruding part, and the first protruding part may be clamped in the groove, so that the first mounting via hole 91 is clamped to the retainer 6.

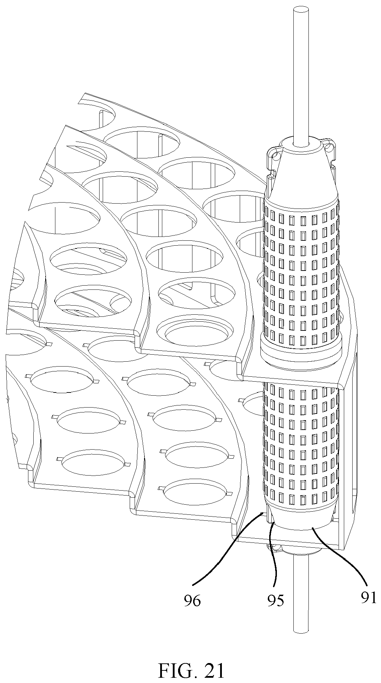

Referring to FIG. 21, the top end part of the retainer 6 has a clamping structure similar to that of a bottom end part, in other words, the top end part and the bottom end part are symmetrical relative to a center of the retainer 6. In a mounting process of the retainer 6, there is no need to distinguish an upper end from a lower end, thereby increasing mounting flexibility of the retainer 6. This facilitates maintenance and replacement.

In the embodiments, a same drop cable is divided into a first optical cable section and a second optical cable section that are connected to each other. When the drop cable is subjected to accidental pulling or the like, a fracture easily occurs at a joint of the first optical cable section and the second optical cable section, to protect an upstream device such as a pre-connection terminator. Therefore, high protection is ensured.

In the descriptions of the embodiments of this application, it should be noted that, unless otherwise specified and limited, the terms "mounting" and "connection" should be understood in a broad sense, for example, may be a fixed connection, or may be an indirect connection by using an intermediate medium, or may be an internal connection between two elements or an interaction relationship between two elements. Persons of ordinary skill in the art may understand specific meanings of the terms in the embodiments of this application according to specific situations.

In the specification, claims, and accompanying drawings of embodiments of this application, the terms "first", "second", "third", "fourth", and so on (if existent) are intended to distinguish between similar objects but do not necessarily indicate a specific order or sequence.

Finally, it should be noted that the foregoing embodiments are merely intended for describing the technical solutions in the embodiments of this application other than limiting this application. Although the embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. A drop cable connection apparatus (100) for optical fiber communications, comprising a pre-connection terminator (2), a drop cable (3), and a drop device (4), wherein the drop cable (3) comprises a first optical cable section (31) and a second optical cable section (32), wherein one end of the first optical cable section (31) is connected to the pre-connection terminator (2), the other end of the first optical cable section (31) is in a signal connection to one end of the second optical cable section (32) with a joint that is configured to fracture with pulling of the drop cable (3) so that the pre-connection terminator is protected from damage, and the other end of the second optical cable section (32) is connected to the drop device (4).

2. The drop cable connection apparatus (100) according to claim 1, further comprising a retainer (6) that at least positions the joint of the first optical cable section (31) and the second optical cable section (32), wherein the retainer (6) is fastened relative to the pre-connection terminator (2)

3. The drop cable connection apparatus (100) according to claim 2, wherein the retainer (6) comprises a support (67), wherein a first passage (671) that is penetrated into by the first optical cable section (31) is disposed in the support (67), and a second passage (672) that is penetrated into by the second optical cable section (32) is further disposed in the support (67), and wherein the joint of the first optical cable section (31) and the second optical cable section (32) is located on the support (67).

4. The drop cable connection apparatus (100) according to claim 3, wherein the retainer (6) further comprises a first fastener (681) and a second fastener (682) that are disposed on the support (67), and the first fastener (681) abuts against the first optical cable section (31), so that the first optical cable section (31) is pressed against an inner wall of the first passage (671), and the second fastener (682) abuts against the second optical cable section (32), so that the second optical cable section (32) is pressed against an inner wall of the second passage (672).

5. The drop cable connection apparatus (100) according to any one of claims 2 to 4, wherein the other end of the first optical cable section (31) and the one end of the second optical cable section (32) are joined in a hot fusion splicing manner.

6. The drop cable connection apparatus (100) according to any one of claims 2 to 5, wherein there are at least two drop cables, at least two output interfaces are disposed on the pre-connection terminator (2), and one output interface is correspondingly connected to one drop cable

7. The drop cable connection apparatus (100) according to any one of claims 2 to 6, further comprising a support bracket (8) fastened relative to the pre-connection terminator (2), wherein the retainer (6) is disposed on the support bracket (8)

8. The drop cable connection apparatus (100) according to claim 7, wherein at least two positioning structure groups (9) are disposed on the support bracket (8), each positioning structure group (9) comprises at least two positioning structures (90), and each positioning structure (90) is configured to position one retainer; and all the positioning structures (90) in each positioning structure group are arranged on a same arc, and arcs corresponding to different positioning structure groups (9) are concentric and have different radiuses.

9. The drop cable connection apparatus (100) according to claim 8, wherein quantities of positioning structures (90) comprised in the different positioning structure groups (9) gradually increase in a direction from a center of the arc to the outside of the center of the arc.

10. The drop cable connection apparatus (100) according to claim 8, wherein heights of top end parts of the positioning structures (90) comprised in the different positioning structure groups (9) gradually decrease in a direction from a center of the arc to the outside of the center of the arc.

11. The drop cable connection apparatus (100) according to any one of claims 8 to 10, wherein the support bracket (8) comprises a first support plate (81) and a second support plate (82) that are spaced apart from each other and that are disposed opposite to each other; and each positioning structure (90) comprises a first mounting via hole (91) and a second mounting via hole (92) that are respectively disposed on the first support plate (81) and the second support plate (82), and the retainer (6) is threaded in the first mounting via hole (91) and the second mounting via hole (92) of the positioning structure (90).

12. The drop cable connection apparatus (100) according to claim 11, wherein the first mounting via hole (91) is clamped to the retainer (6); a first clamping stop part (60) is disposed on an outer wall of the retainer (6), and a first avoidance notch (96) is disposed on a hole wall of the first mounting via hole (91), so as to avoid movement of the first clamping stop part (60) in a process in which the retainer (6) penetrates into the first mounting via hole (91); and the first clamping stop part (60) has a concave first clamping stop groove (95) to correspond to the first mounting via hole (91), and the concave first clamping stop groove (95) may be clamped at edges of two axial apertures of the first mounting via hole (91).

13. The drop cable connection apparatus (100) according to any one of claims 1 to 12, wherein at least two output interfaces are disposed on the pre-connection terminator (2); the pre-connection terminator (2) has a first mounting surface (24) and a second mounting surface (25) thereon, and at least one output interface is disposed on each of the first mounting surface (24) and the second mounting surface (25); and a range of an included angle α between the first mounting surface (24) and the second mounting surface (25) is 0°< α< 180°.

14. A drop cable connection system (200), comprising the drop cable connection apparatus (100) according to any one of claims 1 to 13.

15. The drop cable connection system (200) according to claim 14, further comprising an optical cable armor clamp (5) configured to position the second optical cable section (32), wherein the optical cable armor clamp (5) is fastened relative to the pre-connection terminator (2), and when a tensile force exerted on the second optical cable section (32) is greater than or equal to a tensile threshold of the optical cable armor clamp (5), the second optical cable section (32) is adapted to flutter relative to the optical cable armor clamp (5).

## Patentansprüche

1. Drop-Kabel-Verbindungseinrichtung (100) für optische Nachrichtentechniken, die einen Vorverbindungs-Terminator (2), ein Drop-Kabel (3) und eine Drop-Vorrichtung (4) umfasst,
wobei das Drop-Kabel (3) einen ersten optischen Kabelabschnitt (31) und einen zweiten optischen Kabelabschnitt (32) umfasst, wobei ein Ende des ersten optischen Kabelabschnitts (31) mit dem Vorverbindungs-Terminator (2) verbunden ist, das andere Ende des ersten optischen Kabelabschnitts (31) in einer Signalverbindung mit einem Ende des zweiten optischen Kabelabschnitts (32) mit einer Verbindungsstelle ist, die konfiguriert ist, um mit dem Ziehen des Drop-Kabels (3) zu brechen, sodass der Vorverbindungs-Terminator vor Schäden geschützt ist, und das andere Ende des zweiten optischen Kabelabschnitts (32) mit der Drop-Vorrichtung (4) verbunden ist.

2. Drop-Kabel-Verbindungseinrichtung (100) nach Anspruch 1, die ferner einen Halter (6) umfasst, der mindestens die Verbindungsstelle des ersten optischen Kabelabschnitts (31) und des zweiten optischen Kabelabschnitts (32) positioniert, wobei der Halter (6) relativ zu dem Vorverbindungs-Terminator (2) befestigt ist.

3. Drop-Kabel-Verbindungseinrichtung (100) nach Anspruch 2, wobei der Halter (6) einen Träger (67) umfasst,
wobei ein erster Durchgang (671), der mittels des ersten optischen Kabelabschnitts (31) durchdrungen wird, in dem Träger (67) eingerichtet ist,
und ein zweiter Durchgang (672), der mittels des zweiten optischen Kabelabschnitts (32) durchdrungen wird, ferner in dem Träger (67) eingerichtet ist,
und wobei sich die Verbindungsstelle des ersten optischen Kabelabschnitts (31) und des zweiten optischen Kabelabschnitts (32) auf dem Träger (67) befindet.

4. Drop-Kabel-Verbindungseinrichtung (100) nach Anspruch 3, wobei der Halter (6) ferner eine erste Befestigung (681) und eine zweite Befestigung (682) umfasst, die an dem Träger (67) eingerichtet sind,
und die erste Befestigung (681) an dem ersten optischen Kabelabschnitt (31) anstößt, sodass der erste optische Kabelabschnitt (31) gegen eine Innenwand des ersten Durchgangs (671) gedrückt wird, und die zweite Befestigung (682) an dem zweiten optischen Kabelabschnitt (32) anstößt, sodass der zweite optische Kabelabschnitt (32) gegen eine Innenwand des zweiten Durchgangs (672) gedrückt wird.

5. Drop-Kabel-Verbindungseinrichtung (100) nach einem der Ansprüche 2 bis 4, wobei das andere Ende des ersten optischen Kabelabschnitts (31) und das eine Ende des zweiten optischen Kabelabschnitts (32) in einer Heißschmelzspleißmethode zusammengefügt sind.

6. Drop-Kabel-Verbindungseinrichtung (100) nach einem der Ansprüche 2 bis 5, wobei es mindestens zwei Drop-Kabel gibt, wobei mindestens zwei Ausgangsschnittstellen auf dem Vorverbindungs-Terminator (2) eingerichtet sind, und eine Ausgangsschnittstelle mit einem Drop-Kabel entsprechend verbunden ist.

7. Drop-Kabel-Verbindungseinrichtung (100) nach einem der Ansprüche 2 bis 6, das ferner umfassend eine Tragkonsole (8), die relativ zu dem Vorverbindungs-Terminator (2) befestigt ist, wobei der Halter (6) auf der Tragkonsole (8) eingerichtet ist.

8. Drop-Kabel-Verbindungseinrichtung (100) nach Anspruch 7, wobei mindestens zwei Positionierungsstrukturgruppen (9) auf der Tragkonsole (8) eingerichtet sind, wobei jede Positionierungsstrukturgruppe (9) mindestens zwei Positionierungsstrukturen (90) umfasst, und jede Positionierungsstruktur (90) konfiguriert ist, um einen Halter zu positionieren; und alle Positionierungsstrukturen (90) in jeder Positionierungsstrukturgruppe auf einem gleichen Bogen angeordnet sind, und Bögen, die unterschiedlichen Positionierungsstrukturgruppen (9) entsprechen, konzentrisch sind und unterschiedliche Radien aufweisen.

9. Drop-Kabel-Verbindungseinrichtung (100) nach Anspruch 8, wobei Mengen von Positionierungsstrukturen (90), die in den unterschiedlichen Positionierungsstrukturgruppen (9) enthalten sind, allmählich in einer Richtung von einer Mitte des Bogens zu der Außenseite der Mitte des Bogens zunehmen.

10. Drop-Kabel-Verbindungseinrichtung (100) nach Anspruch 8, wobei Höhen von oberen Endteilen der Positionierungsstrukturen (90), die in den unterschiedlichen Positionierungsstrukturgruppen (9) enthalten sind, allmählich in einer Richtung von einer Mitte des Bogens zu der Außenseite der Mitte des Bogens abnehmen.

11. Drop-Kabel-Verbindungseinrichtung (100) nach einem der Ansprüche 8 bis 10, wobei die Tragkonsole (8) eine erste Trägerplatte (81) und eine zweite Trägerplatte (82) umfasst, die voneinander beabstandet sind und einander gegenüberliegend eingerichtet sind; und jede Positionierungsstruktur (90) ein erstes Montagedurchgangsloch (91) und ein zweites Montagedurchgangsloch (92) umfasst, die jeweils auf der ersten Trägerplatte (81) und der zweiten Trägerplatte (82) eingerichtet sind, und der Halter (6) in dem ersten Montagedurchgangsloch (91) und dem zweiten Montagedurchgangsloch (92) der Positionierungsstruktur (90) eingeschraubt ist.

12. Drop-Kabel-Verbindungseinrichtung (100) nach Anspruch 11, wobei das erste Montagedurchgangsloch (91) an den Halter (6) geklemmt ist; ein erstes Klemmanschlagteil (60) auf einer Außenwand des Halters (6) eingerichtet ist, und eine erste Vermeidungskerbe (96) an einer Lochwand des ersten Montagedurchgangslochs (91) eingerichtet ist, um eine Bewegung des ersten Klemmanschlagteils (60) in einem Vorgang zu vermeiden, in dem der Halter (6) in das erste Montagedurchgangsloch (91) eindringt; und das erste Klemmanschlagteil (60) eine konkave erste Klemmanschlagnut (95) aufweist, um dem ersten Montagedurchgangsloch (91) zu entsprechen, und wobei die konkave
erste Klemmanschlagnut (95) an Rändern zweier axialer Öffnungen des ersten Montagedurchgangslochs (91) geklemmt werden kann.

13. Drop-Kabel-Verbindungseinrichtung (100) nach einem der Ansprüche 1 bis 12, wobei mindestens zwei Ausgangsschnittstellen auf dem Vorverbindungs-Terminator (2) eingerichtet sind; der Vorverbindungs-Terminator (2) eine erste Montageoberfläche (24) und eine zweite Montageoberfläche (25) darauf aufweist, und mindestens eine Ausgangsschnittstelle auf jeder der ersten Montageoberfläche (24) und der zweiten Montageoberfläche (25) eingerichtet ist; und ein Bereich eines eingeschlossenen Winkels α zwischen der ersten Montageoberfläche (24) und der zweiten Montageoberfläche (25) 0°< α< 180° ist.

14. Drop-Kabel-Verbindungssystem (200), das die Drop-Kabel-Verbindungseinrichtung (100) nach einem der Ansprüche 1 bis 13 umfasst.

15. Drop-Kabel-Verbindungssystem (200) nach Anspruch 14, das ferner eine Bewehrungsschelle (5) für das optische Kabel umfasst, die konfiguriert ist, um den zweiten optischen Kabelabschnitt (32) zu positionieren, wobei die Bewehrungsschelle (5) für das optische Kabel relativ zu dem Vorverbindungs-Terminator (2) befestigt ist, und wenn eine auf den zweiten optischen Kabelabschnitt (32) ausgeübte Zugkraft größer als oder gleich einem Zugschwellenwert der Bewehrungsschelle (5) für das optische Kabel ist, der zweite optische Kabelabschnitt (32) angepasst ist, um relativ zu der Bewehrungsschelle (5) für das optische Kabel zu flattern.

## Revendications

1. Appareil de connexion de câble de dérivation (100) destiné à des télécommunications par fibres optiques, comprenant un terminateur de pré-connexion (2), un câble de dérivation (3) et un dispositif de dérivation (4),
dans lequel le câble de dérivation (3) comprend une première section de câble optique (31) et une seconde section de câble optique (32), dans lequel une extrémité de la première section de câble optique (31) est connectée au terminateur de pré-connexion (2), l'autre extrémité de la première section de câble optique (31) est en connexion de signal avec une extrémité de la seconde section de câble optique (32) avec un joint qui est conçu pour se rompre avec la traction du câble de dérivation (3) de sorte que le terminateur de pré-connexion est protégé des dommages, et l'autre extrémité de la seconde section de câble optique (32) est connectée au dispositif de dérivation (4).

2. Appareil de connexion de câble de dérivation (100) selon la revendication 1, comprenant en outre un dispositif de retenue (6) qui positionne au moins le joint de la première section de câble optique (31) et de la seconde section de câble optique (32), dans lequel le dispositif de retenue (6) est fixé par rapport au terminateur de pré-connexion (2).

3. Appareil de connexion de câble de dérivation (100) selon la revendication 2, dans lequel le dispositif de retenue (6) comprend un support (67),
dans lequel un premier passage (671) qui est pénétré par la première section de câble optique (31) est disposé dans le support (67),
et un second passage (672) qui est pénétré par la seconde section de câble optique (32) est en outre disposé dans le support (67),
et dans lequel le joint de la première section de câble optique (31) et de la seconde section de câble optique (32) est situé sur le support (67).

4. Appareil de connexion de câble de dérivation (100) selon la revendication 3, dans lequel le dispositif de retenue (6) comprend en outre un premier élément de fixation (681) et un second élément de fixation (682) qui sont disposés sur le support (67),
et le premier élément de fixation (681) vient en butée contre la première section de câble optique (31), de sorte que la première section de câble optique (31) est pressée contre une paroi interne du premier passage (671), et le second élément de fixation (682) vient en butée contre la seconde section de câble optique (32), de sorte que la seconde section de câble optique (32) est pressée contre une paroi interne du second passage (672).

5. Appareil de connexion de câble de dérivation (100) selon l'une quelconque des revendications 2 à 4, dans lequel l'autre extrémité de la première section de câble optique (31) et
une extrémité de la seconde section de câble optique (32) sont jointes au moyen d'un épissurage par fusion à chaud.

6. Appareil de connexion de câble de dérivation (100) selon l'une quelconque des revendications 2 à 5, dans lequel il y a au moins deux câbles de dérivation, au moins deux interfaces de sortie sont disposées sur le terminateur de pré-connexion (2), et une interface de sortie est connectée de manière correspondante à un câble de dérivation.

7. Appareil de connexion de câble de dérivation (100) selon l'une quelconque des revendications 2 à 6, comprenant en outre une console de support (8) fixée par rapport au terminateur de pré-connexion (2), dans lequel le dispositif de retenue (6) est disposé sur la console de support (8).

8. Appareil de connexion de câble de dérivation (100) selon la revendication 7, dans lequel au moins deux groupes de structures de positionnement (9) sont disposés sur la console de support (8), chaque groupe de structures de positionnement (9) comprend au moins deux structures de positionnement (90), et chaque structure de positionnement (90) est conçue pour positionner un dispositif de retenue ; et toutes les structures de positionnement (90) dans chaque groupe de structures de positionnement sont agencées sur un même arc, et des arcs correspondant à différents groupes de structures de positionnement (9) sont concentriques et ont des rayons différents.

9. Appareil de connexion de câble de dérivation (100) selon la revendication 8, dans lequel des quantités de structures de positionnement (90) comprises dans les différents groupes de structures de positionnement (9) augmentent progressivement dans une direction allant d'un centre de l'arc à l'extérieur du centre de l'arc.

10. Appareil de connexion de câble de dérivation (100) selon la revendication 8, dans lequel des hauteurs de parties d'extrémité supérieure des structures de positionnement (90) comprises dans les différents groupes de structures de positionnement (9) diminuent progressivement dans une direction d'un centre de l'arc à l'extérieur du centre de l'arc.

11. Appareil de connexion de câble de dérivation (100) selon l'une quelconque des revendications 8 à 10, dans lequel la console de support (8) comprend une première plaque de support (81) et une seconde plaque de support (82) qui sont espacées l'une de l'autre et qui sont disposées à l'opposé l'une de l'autre ; et chaque structure de positionnement (90) comprend un premier trou d'interconnexion de montage (91) et un second trou d'interconnexion de montage (92) qui sont respectivement disposés sur la première plaque de support (81) et la seconde plaque de support (82), et le dispositif de retenue (6) est fileté dans le premier trou d'interconnexion de montage (91) et le second trou d'interconnexion de montage (92) de la structure de positionnement (90).

12. Appareil de connexion de câble de dérivation (100) selon la revendication 11, dans lequel le premier trou d'interconnexion de montage (91) est serré sur le dispositif de retenue (6) ; une première partie d'arrêt de serrage (60) est disposée sur une paroi extérieure du dispositif de retenue (6), et une première encoche d'évitement (96) est disposée sur une paroi de trou du premier trou d'interconnexion de montage (91), de manière à éviter un mouvement de la première partie d'arrêt de serrage (60) dans un processus dans lequel le dispositif de retenue (6) pénètre dans le premier trou d'interconnexion de montage (91) ; et la première partie d'arrêt de serrage (60) a une première rainure d'arrêt de serrage concave (95) pour correspondre au premier trou d'interconnexion de montage (91), et
une première rainure d'arrêt de serrage (95) peut être serrée au niveau de bords de deux ouvertures axiales du premier trou de trou d'interconnexion de montage (91).

13. Appareil de connexion de câble de dérivation (100) selon l'une quelconque des revendications 1 à 12, dans lequel au moins deux interfaces de sortie sont disposées sur le terminateur de pré-connexion (2) ; le terminateur de pré-connexion (2) a une première surface de montage (24) et une seconde surface de montage (25) sur celui-ci, et au moins une interface de sortie est disposée sur chacune de la première surface de montage (24) et de la seconde surface de montage (25) ; et une plage d'un angle inclus α entre la première surface de montage (24) et la seconde surface de montage (25) est 0° < α < 180°.

14. Système de connexion de câble de dérivation (200), comprenant l'appareil de connexion de câble de dérivation (100) selon l'une quelconque des revendications 1 à 13.

15. Système de connexion de câble de dérivation (200) selon la revendication 14, comprenant en outre une pince d'armure de câble optique (5) conçue pour positionner la seconde section de câble optique (32), dans lequel la pince d'armure de câble optique (5) est fixée par rapport au terminateur de pré- connexion (2), et lorsqu'une force de traction exercée sur la seconde section de câble optique (32) est supérieure ou égale à un seuil de traction de la pince d'armure de câble optique (5), la seconde section de câble optique (32) est adaptée pour le flottement par rapport à la pince d'armure de câble optique (5).
